# EUROPÄISCHE PATENTSCHRIFT

(11) **EP 1 645 577 B1**
(45) Veröffentlichungstag und Bekanntmachung des Hinweises auf die Patenterteilung: **20.08.2008**
(21) Anmeldenummer: 05020857.8
(22) Anmeldetag: 24.09.2005
(51) Int. Cl.: C08G 18/02, C08G 18/18, C08G 18/78, C07D 273/04

(54) **Verfahren zur Herstellung von Iminooxadiazindiongruppen aufweisenden Polyisocyanaten**
Process for preparing polyisocyanates having iminoooxadiazinedione groups
Procédé de préparation de polyisocyanates possédant des groupes iminoooxadiazinedione

(30) Priorität: 07.10.2004 DE 102004048871
(43) Veröffentlichungstag der Anmeldung: 12.04.2006
(73) Patentinhaber: Bayer MaterialScience AG, 51368 Leverkusen (DE)
(72) Erfinder: Richter, Frank, Dr., 51373 Leverkusen (DE)

(56) Entgegenhaltungen:
- EP-A- 0 798 299
- WO-A-02/092656
- DE-A1- 19 824 490
- LAAS H J ET AL: "ZUR SYNTHESE ALIPHATISCHER POLYISOCYANATE-LACKPOLYISOCYANATE MIT BIURET-, ISOCYANURAT- ODER URETDIONSTRUKTUR THE SYNTHESIS OF ALIPHATIC POLYISOCYANATES CONTAINING BIURET, ISOCYANURATE OR URETDIONE BACKBONES FOR USE IN COATINGS" JOURNAL FUR PRAKTISCHE CHEMIE, CHEMIKER ZEITUNG, WILEY VCH, WEINHEIM, DE, Bd. 336, Nr. 3, Januar 1994 (1994-01), Seiten 185-200, XP000441642 ISSN: 1436-9966

## Beschreibung

Die Erfindung betrifft ein neues Verfahren zur Herstellung aliphatischer Polyisocyanate mit Iminooxadiazindionstrukturen.

Iminooxadiazindiongruppen-enthaltende Polyisocyanate sind hochinteressante Rohstoffe zur Herstellung von Polyurethan-Kunststoffen und -beschichtungen. Ihre Herstellung, beschrieben z.B. in EP-A 0 798 299, erfolgt durch Einsatz salzartig aufgebauter Katalysatoren, die im Anion Fluoride, F⁻, bzw. Di- oder Polyfluoride, [F-H-F]⁻ bzw. [(F-H)ₙ-F]⁻ n > 1, aufweisen.

Zur Katalysatorherstellung muss in letzteren Fällen Fluorwasserstoff (HF) gehandhabt werden, was wegen der unangenehmen physiologischen Eigenschaften der Verbindung einen beträchtlichen sicherheitstechnischen Aufwand bedeutet und zudem technisch nicht überall möglich ist. HF-frei hergestellte, d.h. lediglich Fluoridanionen aufweisende Katalysatoren, z.B. Tetraalkylammonium- bzw- phosphoniumfluoride, weisen, insbesondere in konzentrierter Lösung, eine schlechte Lagerstabilität auf. Sie neigen zur Verfärbung, was sich nachteilig auf die Qualität der mit ihnen hergestellten Polyisocyanate auswirken kann. Stark verdünnte Lösungen sind zwar stabiler, für den bestimmungsgemäßen Einsatz bei der Isocyanat-Trimerisierung unter bevorzugter Bildung von Iminooxadiazindiongruppen allerdings schlecht geeignet, da die Iminooxadiazindion-Selektivität bei Verdünnung leidet.

Grundsätzlich ist die Verwendung von carboxylatgruppenhaltigen Verbindungen bei der NCO-Oligomerisierung bekannt, wobei jedoch typischerweise die Isocyanuratbildung beobachtet wird (J. Prakt. Chem./Chem. Ztg. 1994, 336, 185-200). Der Einsatz fluorierter Carboxylatanionen ist in diesem Zusammenhang nicht beschrieben.

Aufgabe der vorliegenden Erfindung war es daher, alternative, d.h. Fluorid- bzw. Di- und Polyfluorid-freie Katalysatorsysteme für die Herstellung von Iminooxadiazindiongruppen enthaltenden Polyisocyanaten zur Verfügung zu stellen.

Diese Aufgabe konnte durch den Einsatz von salzartigen Katalysatoren gelöst werden, die Anionen der allg. Formel (I) enthalten:

(R^{f})ₙ-CR'₍₃₋ₙ₎-C(O)O⁻ (I)

wobei
- R^{f}: ein perfluorierter C₁-C₃₀-Rest ist, der optional verzweigt, cyclisch und/oder ungesättigt ist,
- R': gleiche oder verschiedene, optional heteroatomhaltige Substituenten ausgewählt aus der Gruppe bestehend aus H, C₁-C₂₀-Alkyl und/oder Aryl sind und
- n: 1 oder 2 ist.

Gegenstand der Erfindung ist daher die Verwendung von Anionen der allgemeinen Formel (I) als Katalysatoren bei der Oligomerisierung von NCO-Gruppen.

Ferner ist ein Gegenstand der vorliegenden Erfindung ein Verfahren zur Herstellung von iminooxadiazindiongruppenhaltigen Polyisocyanaten, bei dem Polyisocyanate in Gegenwart von Anionen der allgemeinen Formel (I) zur Reaktion gebracht werden.

Als Polyisocyanate können im erfindungsgemäßen Verfahren alle dem Fachmann bekannten NCOgruppenhaltigen Verbindungen eingesetzt werden, wobei diese bevorzugt aliphatisch, cycloaliphatisch und/oder araliphatisch gebundene NCO-Gruppen aufweisen.

Bevorzugt sind dies Hexamethylendiisocyanat (HDI), Methylpentandiisocyanat (MPDI), Trimethylhexandiisocyanat (TMDI), Bis(isocyanatomethyl)cyclohexan (H₆XDI), Norbomandiisocyanat (NBDI), Isophorondiisocyanat, Bis(isocyanatocyclohexyl)methan (H₁₂MDI) sowie deren beliebige Mischungen untereinander. Selbstverständlich können auch deren höhermolekulare Folgeprodukte mit Urethan-, Biuret-, Uretdion-, Isocyanurat- und/oder Allophanatstruktur als Polyisocyanate eingesetzt werden.

Als Katalysatoren zur Durchführung des erfindungsgemäßen Verfahrens kommen prinzipiell alle Stoffe, rein oder in beliebiger Abmischung untereinander in Frage, die Anionen der allgemeinen Formel (I) enthalten. Beispielhaft genannt seien Salze der 3,3,3-Trifluorpropansäure, 4,4,4,3,3-Pentafluorbutansäure, 5,5,5,4,4,3,3-Heptafluorpentansäure, 6,6,6,5,5,4,4,3,3-Nonafluorhexansäure, 7,7,7,6,6,5,5,4,4,3,3-Undekafluorheptansäure, 8,8,8,7,7,6,6,5,5,4,4,3,3-Tridecafluoroktansäure, 9,9,9,8,8,7,7,6,6,5,5,4,4,3,3-Pentadekafluornonansäure, 10,10,10,9,9,8,8,7,7,6,6,5,5,4,4,3,3-Heptadekafluordekansäure, 11,11,11,10,10,9,9,8,8,7,7,6,6,5,5,4,4,3,3-Heptadekafluorundekansäure, 2-Trifluormethyl-3,3,3-trifluorpropansäure, 2-Trifluormethyl-4,4,4,3,3-pentafluorbutansäure, 2-Trifluormethyl-5,5,5,4,4,3,3-heptafluorpentansäure, 2-Trifluormethyl-6,6,6,5,5,4,4,3,3-nonafluorhexansäure, 2-Trifluormethyl-7,7,7,6,6,5,5,4,4,3,3-undekafluorheptansäure, 2-Trifluormethyl-8,8,8,7,7,6,6,5,5,4,4,3,3-tridecafluoroktansäure, 2-Trifluormethyl-9,9,9,8,8,7,7,6,6,5,5,4,4,3,3-pentadekafluornonansäure, 2-Trifluormethyl-10,10,10,9,9,8,8,7,7,6,6,5,5,4,4,3,3-heptadekafluordekansäure, 2-Trifluormethyl-11,11,11,10,10,9,9,8,8,7,7,6,6,5,5,4,4,3,3-heptadekafluorundekansäure, 3,3-Bis(trifluormethyl)-4,4,4-trifluorbutansäure, 3,3-Bis(trifluormethyl)-5,5,5,4,4-pentafluorpentansäure, 3,3-Bis(trifluormethyl)-6,6,6,5,5,4,4-heptafluorhexansäure, 3,3-Bis(trifluormethyl)-7,7,7,6,6,5,5,4,4-nonafluorheptansäure, 3,3-Bis(trifluormethyl)-8,8,8,7,7,6,6,5,5,4,4-undecafluoroktansäure, 3,3-Bis(trifluormethyl)-9,9,9,8,8,7,7,6,6,5,5,4,4-tridecafluornonansäure, 3,3-Difluorprop-2-ensäure, 4,4,4,3-Tetrafluorbut-2-ensäure, 5,5,5,4,4,3-Hexafluorpent-2-ensäure, 6,6,6,5-5,4,4,3-Oktafluorhex-2-ensäure, 7,7,7,6,6,5,5,4,4,3-Dekafluorhept-2-ensäure, 8,8,8,7,7,6,6,5,5-4,4,3-Dodekafluorokt-2-ensäure, 9,9,9,8,8,7,7,6,6,5,5,4,4,3-Tetradekafluornon-2-ensäure sowie 10,10,10,9,9,8,8,7,7,6,6,5,5,4,4,3-Hexadekafluordec-2-ensäure.

Bevorzugte Katalysatoren sind quaternäre Ammonium- sowie Phosphoniumsalze der vorstehend genannten Säuren, bevorzugt Tetraalkylammonium- oder -phosphoniumsalze mit 1 bis 30 C-Atomen im Alkylrest.

Besonders bevorzugte Katalysatoren sind quaternäre Ammonium- sowie Phosphoniumsalze der nachstehend genannten Säuren: 3,3,3-Trifluorpropansäure, 4,4,4,3,3-Pentafluorbutansäure, 5,5,5,4,4,3,3-Heptafluorpentansäure, 6,6,6,5,5,4,4,3,3-Nonafluorhexansäure, 7,7,7,6,6,5,5,4,4,3,3-Undekafluorheptansäure, 8,8,8,7,7,6,6,5,5,4,4,3,3-Tridecafluoroktansäure, 9,9,9,8,8,7,7,6,6,5,5,4-4,3,3-Pentadekafluornonansäure, 10,10,10,9,9,8,8,7,7,6,6,5,5,4,4,3,3-Heptadekafluordekansäure, 3,3-Difluorprop-2-ensäure, 4,4,4,3-Tetrafluorbut-2-ensäure, 5,5,5,4,4,3-Hexafluorpent-2-ensäure, 6,6,6,5,5,4,4,3-Oktafluorhex-2-ensäure, 7,7,7,6,6,5,5,4,4,3-Dekafluorhept-2-ensäure, 8,8,8,7,7,6,6-5,5,4,4,3-Dodekafluorokt-2-ensäure, 9,9,9,8,8,7,7,6,6,5,5,4,4,3-Tetradekafluornon-2-ensäure sowie 10,10,10,9,9,8,8,7,7,6,6,5,5,4,4,3-Hexadekafluordec-2-ensäure sowie der 3,3-Bis-(trifluormethyl)-6,6,6,5,5,4,4-heptafluorhexansäure.

Da diese Verbindungen in der Regel fest bzw. hochviskos sind, benötigt man für ihren Einsatz bei der erfindungsgemäßen Isocyanat-Trimerisierung in der Regel Katalysatorlösungsmittel. Hierfür eignen sich beispielsweise geradkettige und verzweigte, primäre, sekundäre und tertiäre Alkohole mit ein bis zwanzig C-Atomen und gegebenenfalls weiteren Heteroatomen, insbesondere O, die nicht direkt an ein Wasserstoffatom gebunden sein müssen. Bevorzugt werden Lösemittel der vorstehend genannten Art eingesetzt, die ein bis zwölf C-Atome aufweisen, z.B. Methanol, Ethanol, n- sowie iso-Propanol, 1- und 2-Butanol, iso-Butanol, 2-Ethylhexanol, Methoxypropanol, Ethylenglykolmethylether oder Diethylenglykolmethylether.

Die Menge des im erfindungsgemäßen Verfahren einzusetzenden Katalysators richtet sich in erster Linie nach der angestrebten Reaktionsgeschwindigkeit und beträgt 0,001 bis 1 mol-%, bezogen auf die Summe der Stoffmengen des eingesetzten Isocyanates und des Katalysators. Bevorzugt werden 0,01 bis 0,5 mol% Katalysator eingesetzt.

Das erfindungsgemäße Verfahren wird im Temperaturbereich 0°C bis 150°C, bevorzugt 40°C bis 120°C durchgeführt.

Das erfindungsgemäße Verfahren wird so geführt, dass der Umsatz der NCO-Gruppen 5 bis 90 mol-%, bevorzugt 10 bis 60 mol-%, ganz besonders bevorzugt 10 bis 50 mol-% beträgt.

Um Umsätze der NCO-Gruppen gemäß der vorstehenden Bereiche zu realisieren, wird die Reaktion bei dem gewünschten Umsetzungsgrad abgebröchen.

Zum Abbruch der Reaktion nach Erreichen des gewünschten Umsetzungsgrades eignen sich prinzipiell alle vorbeschriebenen Katalysatorgifte (vgl. J. Prakt. Chem./Chem. Ztg. 1994, 336, 185--200 und dort zit. Lit.) wie starke organische oder anorganische Säuren sowie deren Säurechloride. Mitunter genügt auch eine Temperaturerhöhung zur wirksamen Katalysatordesaktivierung aus (,thermische Abstoppung').

Im Anschluss an die Katalysatordesaktivierung kann das nicht umgesetzte Monomer sowie gegebenenfalls mitverwendetes Lösemittel mit Hilfe aller bekannter Separationstechniken wie z.B. Destillation, Extraktion oder Kristallisation/Filtration abgetrennt werden. Bevorzugt ist die Destillation, gegebenenfalls in der speziellen Ausführungsform der Dünnschichtdestillation. Selbstverständlich können auch Kombinationen zweier oder mehrerer dieser Techniken angewendet werden.

Bevorzugt wird das nicht umgesetzte Monomer destillativ entfernt.

Soll das erfmdungsgemäß hergestellte Polyisocyanat noch freies, nicht umgesetztes Monomer enthalten, wie es z.B. für die Weiterverarbeitung zu NCO-blockierten Produkten von Interesse ist, so kann nach Katalysatordesaktivierung auf die Monomerenabtrennung verzichtet werden.

Es ist für die Durchführung des erfindungsgemäßen Verfahrens unerheblich, ob das Verfahren ganz oder teilweise diskontinuierlich oder kontinuierlich durchgeführt wird.

Weiterhin können im erfindungsgemäßen Verfahren zu einem beliebigen Zeitpunkt, in der Polyisocyanatchemie übliche Additive und Stabilisatoren zugesetzt werden. Beispiele sind Antioxidanzien, wie z.B. sterisch gehinderte Phenole (2,6-Di-tert.butylphenol, 4-Methyl-2,6-di-tert.butylphenol), Lichtschutzmittel, wie z.B. HALS-Amine, Triazole etc., schwache Säuren oder Katalysatoren für die NCO-OH-Reaktion wie z.B. Dibutylzinndilaurat (DBTL).

Nach dem erfindungsgemäßen Verfahren hergestellte Produkte auf Basis gegebenenfalls verzweigter, linearaliphatischer Di- oder Polyisocyanate, die keine Cycloalkylsubstituenten aufweisen, sind farbhell und haben eine Viskosität < 100 000 mPas/23°C. Werden cycloaliphatische und/oder araliphatische Di- oder Polyisocyanate eingesetzt, werden hochviskose bis feste Harze erhalten (Viskosität > 100 000 mPas/23°C).

In monomerenarmer Form, d.h. nach Abtrennung von nicht umgesetztem Monomer, weisen die erfindungsgemäßen Produkte einen NCO-Gehalt < 27 Gew.-%, bevorzugt < 25 Gew.-%, auf.

Die nach dem erfindungsgemäßen Verfahren hergestellten Polyisocyanate dienen als Ausgangsmaterialien zur Herstellung von z.B. Formkörpern (gegebenenfalls geschäumt), Lacken, Beschichtungsmitteln, Klebstoffen oder Zuschlagstoffen.

Zur Blockierung der freien NCO-Gruppen eignen sich alle dem Fachmann bekannten Methoden. Als Blockierungsmittel können insbesondere Phenole (z.B. Phenol, Nonylphenol, Kresol), Oxime (z.B. Butanonoxim, Cyclohexanonoxim), Lactame (z.B. ε-Caprolactam), sekundäre Amine (z.B. Diisopropylamin), Pyrazole (z.B. Dimethylpyrazol), Imidazole, Triazole oder Malon- und Essigsäureester verwendet werden.

Die nach dem erfindungsgemäßen Verfahren hergestellten, Iminooxadiazindiongruppen aufweisenden Polyisocyanate können insbesondere zur Herstellung von Ein- und Zweikomponenten-Polyurethanlacken gegebenenfalls in Mischungen mit anderen Di- oder Polyisocyanaten des Standes der Technik, wie Biuret-, Urethan-, Allophanat-, Isocyanurat-, sowie Iminooxadiazindiongruppen enthaltenden Di- oder Polyisocyanaten eingesetzt werden.

Ebenfalls bevorzugt ist die Verwendung der erfindungsgemäß hergestellten Polyisocyanate auf Basis gegebenenfalls verzweigter, linearaliphatischer Isocyanate als Reaktivverdünner zur Viskositätserniedrigung höherviskoser Polyisocyanat-Harze.

Zur Umsetzung der erfindungsgemäß hergestellten Polyisocyanate zum Polyurethan können alle Verbindungen mit mindestens zwei isocyanatreaktiven Funktionalitäten einzeln oder in beliebigen Mischungen untereinander eingesetzt werden (isocyanatreaktives Bindemittel).

Bevorzugt ist die Verwendung eines oder mehrerer, in der Polyurethanchemie an sich bekannter, isocyanatreaktiver Bindemittel wie Polyhydroxyverbindungen oder Polyaminen. Als Polyhydroxyverbindungen werden besonders bevorzugt Polyester-, Polyether-, Polyacrylat- und/oder Polycarbonsäure-Polyole, gegebenenfalls auch unter Zusatz niedermolekularer, mehrwertiger Alkohole eingesetzt.

Das Äquivalentverhältnis zwischen den Isocyanatgruppen der nach dem erfindungsgemäßen Verfahren hergestellten Produkte, die gegebenenfalls auch blockiert sein können, und den isocyanatreaktiven Gruppen des Bindemittels, wie z.B. OH-, NH- oder COOH, liegt im Bereich von 0,8 bis 3, vorzugsweise 0,8 bis 2.

Für die Beschleunigung der Vernetzungsreaktion der erfindungsgemäß hergestellten Polyisocyanate mit dem isocyanatreaktiven Bindemittel können alle aus der Polyurethanchemie bekannten Katalysatoren verwendet werden. Beispielweise können Metallsalze wie Dibutylzinn-IV-dilaurat, Zinn-II-bis(2-ethylhexanoat), Wismut-III-tris(2-ethylhexanoat), Zink-II-bis(2-ethyl-hexanoat) oder Zinkchlorid sowie tertiäre Amine wie 1,4-Diazabicyclo(2,2,2)oktan, Triethylamin oder Benzyldimethylamin verwendet werden.

Bei der Formulierung werden das erfindungsgemäß hergestellte, gegebenenfalls blockierte Polyisocyanat, das isocyanatreaktive Bindemittel, Katalysator(en) und gegebenenfalls die üblichen Zusätze wie Pigmente, Füllstoffe, Additive, Verlaufshilfsmittel, Entschäumer und/oder Mattierungsmittel miteinander auf einem üblichen Mischaggregat wie z.B. einer . Sandmühle, gegebenenfalls unter Verwendung von Lösungsmitteln, vermischt und homogenisiert.

Als Lösungsmittel geeignet sind alle an sich bekannten üblichen Lacklösemittel wie z.B. Ethyl-und Butylacetat, Ethylen- oder Propylenglykolmonomethyl-, -ethyl- oder -propyletheracetat, 2-Butanon, 4-Methyl-2-pentanon, Cyclohexanon, Toluol, Xylol, Solventnaphtha, N-Methylpyrrolidon etc.

Die Beschichtungsmittel können in Lösung oder aus der Schmelze sowie gegebenenfalls in fester Form (Pulverlacke) nach den üblichen Methoden wie z.B. Streichen, Rollen, Gießen, Spritzen, Tauchen, dem Wirbelsinterverfahren oder durch elektrostatische Sprühverfahren auf dem zu beschichtenden Gegenstand appliziert werden.

Als Substrate eignen sich sämtliche bekannten Werkstoffe, insbesondere Metalle, Holz, Kunststoffe und Keramik.

Alle Prozentangaben sind, soweit nicht anders vermerkt, als Gewichtsprozent zu verstehen.

Die Ermittlung des NCO-Gehaltes der in den Beispielen und Vergleichsbeispielen beschriebenen Harze erfolgt durch Titration gemäß DIN 53 185.

Die dynamischen Viskositäten wurden bei 23°C mit dem Viskosimeter VT 550, Platte-Kegel Messanordnung PK 100, der Fa. Haake bestimmt. Durch Messungen bei unterschiedlichen Schergeschwindigkeiten wurde sichergestellt, dass das Fließverhalten der beschriebenen erfindungsgemäßen Polyisocyanatmischungen wie auch das der Vergleichsprodukte dem idealer Newtonscher Flüssigkeiten entspricht. Die Angabe der Schergeschwindigkeit kann deshalb entfallen.

Die Angabe von mol-% bzw. des molaren Verhältnisses unterschiedlicher Strukturtypen zueinander basiert auf NMR-spektroskopischen Messungen. Sie bezieht sich immer, so nicht anders ausgewiesen, auf die Summe der durch die Modifizierungsreaktion (Oligomerisierung) aus den vorher freien NCO-Gruppen gebildeten Strukturtypen. Die Messungen erfolgen auf dem Gerät DPX 400 der Fa. Bruker an ca. 5 %igen (¹H-NMR) bzw. ca. 50 %igen (¹³C-NMR) Proben in trokkenem CDCl₃ bei einer Frequenz von 400 MHz (¹H-NMR) bzw. 100 MHz (¹³C-NMR). Als Referenz für die ppm-Skale werden geringe Mengen von Tetramethylsilan im Lösungsmittel mit einer ¹H-chem. Verschiebung von 0 ppm (¹H-NMR) bzw. das Lösungsmittel selbst (CDCl₃) mit einer Verschiebung von 77,0 ppm (¹³C-NMR) gewählt. Daten für die chemische Verschiebung der in Frage kommenden Verbindungen sind der Literatur entnommen (vgl. Die Angewandte Makromolekulare Chemie 1986, 141, 173-183 und darin zit. Lit) bzw. durch Vermessung von Modellsubstanzen gewonnen worden. Das in Anlehnung an das in Ber. d. dtsch. Chem. Ges. 1927, 60, 295 beschriebene Verfahren aus Methylisocyanat zugängliche 3,5-Dimethyl-2-methylimino-4,6-diketo-1,3,5-oxadiazin (Methylisocyanat-Trimer vom Iminooxadiazindiontyp) weist folgende NMR-chem. Verschiebungen auf (in ppm): 3,09; 3,08 und 2,84 (¹H-NMR, CH₃) bzw. 148,3; 144,6 und 137,3 (¹³C-NMR, C=O/C=N). Iminooxadiazindione aus aliphatischen Diisocyanaten wie z.B. HDI haben sehr ähnliche ¹³C-NMR chem. Verschiebungen der C=O/C=N Atome und sind zweifelsfrei als solche von anderen Isocyanat-Folgeprodukten zu unterscheiden.

CF₃CH₂COOH wurde von der Firma ABCR GmbH & Co. KG, D-76187 Karlsruhe, DE und (CF₃)₂CH-COOH von der Firma Aldrich, 82018 Taufkirchen, DE kommerziell erworben und ohne weitere Reinigung eingesetzt.

Längerkettige, partiell fluorierte Alkancarbonsäuren der Formel R^{f}-CH₂-COOH wurden ausgehend von den entsprechenden Alkoholen der Formel R^{f}-CH₂-CH₂-OH, die unter der Handelsbezeichnung Fluowet^{®} EA bei der Fa. Clariant GmbH, Sulzbach, DE erhältlich sind, nach der in J. Fluorine Chem. 1995, 70 19-26 beschriebenen Methode durch Oxidation mit Jones Reagenz hergestellt.

### Herstellung von Katalysator I

0,5 g 3,3,3-Trifluorpropansäure wurden unter Rühren mit einem Magnetrührstäbchen in 1 ml Methanol gelöst und tropfenweise mit 0,7 g einer 30%igen Natriummethylatlösung in Methanol versetzt. Unter leichter Erwärmung bildete sich eine weiße Emulsion. Nach 30 minütigem Rühren wurde 1 ml Methanol zugesetzt und anschließend 1,63 g einer 70%igen iso-propanolischen Lösung von Tetrabutylphosphoniumchlorid zugetropft. Nach 2 stündigem Rühren bei Zimmertemperatur wurde filtriert (200 µm Filterplättchen), der Niederschlag mehrmals mit Methanol gewaschen und die vereinigten Filtrate bei Zimmertemperatur im Vakuum bei 10 mbar eingeengt. Der ¹H-NMR-spektroskopisch bestimmte Gehalt der resultierenden Lösung an CF₃CH₂CO₂⁻ Bu₄P⁺ belief sich auf 92%. Weiterhin wurden 2% iso-Propanol und 6 % Methanol gefunden. Im ¹⁹F-NMR Spektrum war nur das Signal der CF₃-Gruppe bei -63,3 ppm zu sehen.

Die weiteren Katalysatoren II - V und A1 - A3, die in den folgenden Beispielen eingesetzt wurden, wurden analog hergestellt. Die entsprechenden Katalysatorlösungen sind in Tabelle 1 zusammengestellt.

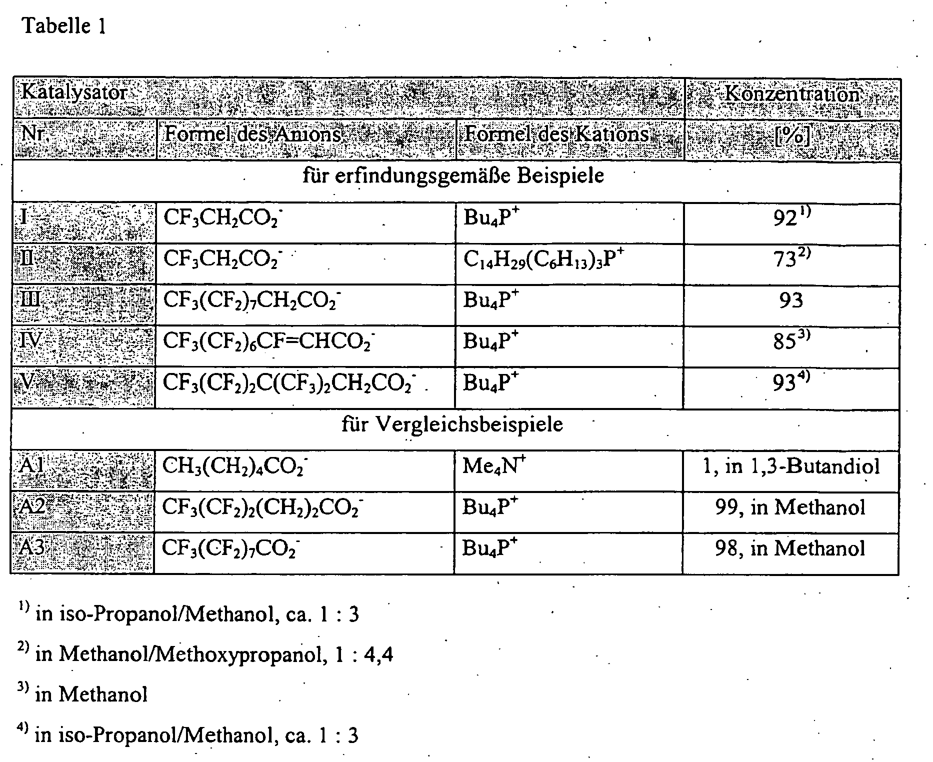

### Beispiel 1(erfindungsgemäß)

Zu 10,4 g (61,8 mmol) frisch entgastem HDI, die in einem mit Septum verschlossenen Glasgefäß bei 50°C unter Stickstoff mit einem Magnetrührstäbchen gerührt wurden, sind 24 mg Katalysatorlösung I (0,06 mmol CF₃CH₂CO₂⁻ Bu₄P⁺; entspr. 0,1 mol-% Katalysator auf HDI bezogen) zugegeben worden. Anschließend wurde in regelmäßigen Abständen der Fortgang der Reaktion durch Messung des Brechungsindex' der Reaktionsmischung (bei 20°C und der Frequenz des Lichtes der D-Linie des Natriumspektrums, n_{D}²⁰) überprüft (Start = kein Umsatz = n_{D}²⁰ des reinen HDI = 1,4523). Nach 5,5 h wurde das Fortschreiten der Reaktion bei n_{D}²⁰ = 1,4635 durch Zugabe von 25 mg einer 40 %igen Lösung von p-Toluolsulfonsäure in iso-Propanol unterbunden. Das NMR-spektroskopisch gefundene Verhältnis von Isocyanurat- zu Iminooxadiazindiongruppen betrug 1:1.

### Beispiel 2 (erfindungsgemäß)

In einem Vierhals-Rundkolben mit Rührer, Innenthermometer, Dosiereinrichtung für den Katalysator und Rückflusskühler, der an eine Inertgasanlage (Stickstoff) angeschlossen war, wurden 200 g (1,19 mol) HDI unter 30 minütigem Rühren im Vakuum (0,1 mbar) bei 60 °C von gelösten Gasen befreit. Nach Belüften mit Stickstoff wurden portionsweise innerhalb 30 Minuten 0,55 g Katalysatorlösung II zugetropft. Die Innentemperatur der Reaktionsmischung stieg dabei leicht auf 62°C an. Nachdem eine weitere Stunde bei 60°C gerührt worden war, betrug der n_{D}²⁰ der Reaktionsmischung 1,4588. Anschließend wurde durch Zugabe von 0,25 g einer 40 %igen Lösung von p-Toluolsulfonsäure in iso-Propanol die Weiterreaktion unterbunden. Das NMR-spektroskopisch gefundene Verhältnis von Isocyanurat- zu Iminooxadiazindiongruppen betrug 53:47. Die Aufarbeitung der Reaktionsmischung mittels Dünnschichtdestillation bei 0,1 mbar und 150°C lieferte 32 g eines Polyisocyanatharzes mit folgenden Daten:
NCO-Gehalt: 24,1 %
Viskosität @ 23°C: 640 mPas.

### Beispiel 3 (erfindungsgemäß)

Es wurde wie in Beispiel 1 aufgeführt verfahren, mit dem Unterschied, dass 44,6 mg Katalysator III (0,062 mmol CF₃(CF₂)₇CH₂CO₂⁻ Bu₄P⁺; entspr. 0,1 mol-% Katalysator auf HDI bezogen) verwendet wurden. Nach 2 h Rühren bei 50°C betrug der n_{D}²⁰ der Reaktionsmischung 1,4789. Anschließend wurde durch Zugabe von 27 mg einer 40 %igen Lösung von p-Toluolsulfonsäure in iso-Propanol die Weiterreaktion unterbunden. Das NMR-spektroskopisch gefundene Verhältnis von Isocyanurat- zu Iminooxadiazindiongruppen betrug 47:53.

### Beispiel 4 (erfindungsgemäß)

Es wurde wie in Beispiel 1 aufgeführt verfahren, mit dem Unterschied, dass 44,6 mg Katalysator IV (0,05 mmol CF₃(CF₂)₆CF=CHCO₂⁻ Bu₄P⁺; entspr. 0,09 mol-% Katalysator auf HDI bezogen) verwendet wurden. Nach 2,5 h Rühren bei 50°C betrug der n_{D}²⁰ der Reaktionsmischung 1,4875. Anschließend wurde durch Zugabe von 2,3 mg einer 40 %igen Lösung von p-Toluolsulfonsäure in iso-Propanol die Weiterreaktion unterbunden. Das NMR-spektroskopisch gefundene Verhältnis von Isocyanurat- zu Iminooxadiazindiongruppen betrug 62:38.

### Beispiel 5 (erfindungsgemäß)

Es wurde wie in Beispiel 1 aufgeführt verfahren, mit dem Unterschied, dass 39,3 mg Katalysator V (0,06 mmol CF₃(CF₂)₂C(CF₃)₂CH₂CO₂⁻ Bu₄P⁺; entspr. ca. 0,1 mol-% Katalysator auf HDI bezogen) verwendet wurden. Nach 2-stündigem Rühren bei 50°C betrug der n_{D}²⁰ der viskosen Reaktionsmischung 1,4902. Anschließend wurde durch Zugabe von 25 mg einer 40 %igen Lösung von p-Toluolsulfonsäure in iso-Propanol die Weiterreaktion unterbunden. Das NMR-spektroskopisch gefundene Verhältnis von Isocyanurat- zu Iminooxadiazindiongruppen betrug 64 : 36.

### Vergleichsbeispiel V1

Es wurde wie in Beispiel 2 aufgeführt verfahren, mit dem Unterschied, dass 500 g HDI im Verlaufe von 15 Minuten mit insgesamt 3 g Katalysatorlösung A1 tropfenweise so versetzt wurden, dass die Innentemperatur der Reaktionsmischung maximal auf 69°C anstieg. Nachdem eine weitere Stunde bei 60°C gerührt worden war, betrug der n_{D}²⁰ der Reaktionsmischung 1,4627. Der titrierte NCO-Gehalt der Mischung war auf 43,4 % abgefallen. Anschließend wurde durch Zugabe von 0,07 g Dibutylphosphat die Weiterreaktion unterbunden. Im NMR-Spektrum wurden neben Isocyanurat und Allophanat nur Spuren Iminooxadiazindion gefunden. Die Aufarbeitung der Reaktionsmischung mittels Dünnschichtdestillation bei 0,1 mbar und 150°C lieferte 114 g eines Polyisocyanatharzes mit folgenden Daten:
NCO-Gehalt: 22,6 %
Viskosität @ 23°C: 1700 mPas

### Vergleichsbeispiel V2

Es wurde wie in Beispiel 1 aufgeführt verfahren, mit dem Unterschied, dass 31 mg Katalysator A2 (0,06 mmol CF₃(CF₂)₂(CH₂)₂CO₂⁻ Bu₄P⁺; entspr. 0,1 mol-% Katalysator auf HDI bezogen) verwendet wurden. Nach 3-stündigem Rühren bei 50°C war der n_{D}²⁰ der Reaktionsmischung auf 1,4710 angestiegen. Im NMR-Spektrum wurden neben Isocyanurat nur Spuren Iminooxadiazindion gefunden.

### Vergleichsbeispiel V3

Es wurde wie in Beispiel 1 aufgerührt verfahren, mit dem Unterschied, dass 448 mg Katalysator A3 (0,6 mmol CF₃(CF₂)₇CO₂⁻ Bu₄P⁺; entspr. 1 mol-% ,Katalysator' auf HDI bezogen) verwendet wurden. Erst nach 24-stündigem Rühren bei 50°C war der n_{D}²⁰ der Reaktionsmischung etwas angestiegen (1,4608), was in Anbetracht der sehr hohen Katalysatorkonzentration und der langen Reaktionszeit darauf hindeutet, dass A3 nahezu inert in Bezug auf die gewünschte NCO-Oligomerisierung, insbesondere die Iminooxadiazindionbildung ist.

Wie die Vergleichsbeispiele V1 - V3 zeigen sind nicht alle Carboxylate mit partiell fluorierten Ketten für die Katalyse der Iminooxadiazindionbildung geeignet. Lediglich solche, welche zwischen der Perfluoralkylgruppe und der Carboxylatgruppe eine oder zwei nichtfluorierte C-Atome aufweisen, sind aktive Katalysatoren, wobei eine signifikante Iminooxadiazindionselektivität nur bei Vorliegen eines nicht fluorierten C-Atoms zwischen der Perfluoralkylgruppe und der Carboxylatgruppe beobachtet wird.

## Patentansprüche

1. Verwendung von Anionen der allgemeinen Formel (I)
(R^{f})ₙ-CR'₍₃₋ₙ₎-C(O)O⁻ (I)
wobei
R^{f} ein perfluorierter C₁-C₃₀-Rest ist, der optional verzweigt, cyclisch und/oder ungesättigt ist,
R' gleiche oder verschiedene, optional heteroatomhaltige Substituenten ausgewählt aus der Gruppe bestehend aus H, C₁-C₂₀-Alkyl und/oder Aryl sind und
n 1 oder 2 ist
als Katalysatoren bei der Oligomerisierung von NCO-Gruppen.

2. Verfahren zur Herstellung von iminooxadiazindiongruppenhaltigen Polyisocyanaten, bei dem Polyisocyanate in Gegenwart von Anionen der allgemeinen Formel (I)
(R^{f})ₙ-CR'₍₃₋ₙ₎-C(O)O⁻ (I)
wobei
R^{f} ein perfluorierter C₁-C₃₀-Rest ist, der optional verzweigt, cyclisch und/oder ungesättigt ist,
R' verschiedene optional heteroatomhaltige Substituenten ausgewählt aus der Gruppe bestehend aus H, C₁-C₂₀-Alkyl und/oder Aryl sind und
n 1 oder 2 ist
zur Reaktion gebracht werden.

3. Verfahren zur Herstellung von iminooxadiazindiongruppenhaltigen Polyisocyanaten gemäß Anspruch 2, **dadurch gekennzeichnet, dass** Polyisocyanate mit aliphatisch und/oder cycloaliphatisch gebundenen NCO-Gruppen eingesetzt werden.

4. Verfahren zur Herstellung von iminooxadiazindiongruppenhaltigen Polyisocyanaten gemäß Anspruch 2 oder 3, **dadurch gekennzeichnet, dass** als Gegenion der Anionen der Formel (I) quaternäre Ammonium- oder Phosphoniumkationen eingesetzt werden.

5. Verfahren zur Herstellung von iminooxadiazindiongruppenhaltigen Polyisocyanaten gemäß einem der Ansprüche 2 bis 4, **dadurch gekennzeichnet, dass** als Katalysatoren quaternäre Ammonium- sowie Phosphoniumsalze der 3,3,3-Trifluorpropansäure, 4,4,4,3,3-Pentafluorbutansäure, 5,5,5,4,4,3,3-Heptafluorpentansäure, 6,6,6,5,5,4,4,3,3-Nonafluorhexansäure, 7,7,7,6,6,5,5,4,4,3,3-Undekafluorheptansäure, 8,8,8,7,7,6,6,5,5,4,4,3,3-Tridecafluoroktansäure, 9,9,9,8,8,7,7,6,6,5,5,4,4,3,3-Pentadekafluornonansäure, 10,10,10,9,-9,8,8,7,7,6,6,5,5,4,4,3,3-Heptadekafluordekansäure, 3,3-Difluorprop-2-ensäure, 4,4,4,3-Tetrafluorbut-2-ensäure, 5,5,5,4,4,3-Hexafluorpent-2-ensäure, 6,6,6,5,5,4,4,3-Oktafluorhex-2-ensäure, 7,7,7,6,6,5,5,4,4,3-Dekafluorhept-2-ensäure, 8,8,8,7,7,6,6,5,5,4,4,3-Dodekafluorokt-2-ensäure, 9,9,9,8,8,7,7,6,6,5,5,4,4,3-Tetradekafluornon-2-ensäure, 10,10,-10,9,9,8,8,7,7,6,6,5,5,4,4,3-Hexadekafluordec-2-ensäure oder der 3,3-Bis-(trifluormethyl)-6,6,6,5,5,4,4-heptafluorhexansäure verwendet werden.

## Claims

1. Use of anions of the general formula (I)
(R^{f})ₙ-CR'₍₃₋ₙ₎-C(O)O⁻ (I)
where
R^{f} is a perfluorinated C₁-C₃₀ radical which is optionally branched, cyclic and/or unsaturated,
R' are identical or different, optionally heteroatom-containing substituents selected from the group consisting of H, C₁-C₂₀ alkyl and/or aryl and
n is 1 or 2
as catalysts in the oligomerization of NCO groups.

2. Process for preparing polyisocyanates containing iminooxadiazinedione groups, in which polyisocyanates are reacted in the presence of anions of the general formula (I)
(R^{f})ₙ-CR'₍₃₋ₙ₎-C(O)O⁻ (I)
where
R^{f} is a perfluorinated C₁-C₃₀ radical which is optionally branched, cyclic and/or unsaturated,
R' are different, optionally heteroatom-containing substituents selected from the group consisting of H, C₁-C₂₀ alkyl and/or aryl and
n is 1 or 2.

3. Process for preparing polyisocyanates containing iminooxadiazinedione groups according to Claim 2, **characterized in that** polyisocyanates having aliphatically and/or cycloaliphatically attached NCO groups are used.

4. Process for preparing polyisocyanates containing iminooxadiazinedione groups according to Claim 2 or 3, **characterized in that** quaternary ammonium cations or phosphonium cations are used as the counterion to the anions of the formula (I).

5. Process for preparing polyisocyanates containing iminooxadiazinedione groups according to one of Claims 2 to 4, **characterized in that** quaternary ammonium salts and phosphonium salts of 3,3,3-trifluoropropanoic acid, 4,4,4,3,3-pentafluorobutanoic acid, 5,5,5,4,4,3,3-heptafluoropentanoic acid, 6,6,6,5,5,4,4,3,3-nonafluorohexanoic acid, 7,7,7,6,6,5,5,4,4,3,3-undecafluoroheptanoic acid, 8,8,8,7,7,6,6,5,5,4,4,3,3-tridecafluorooctanoic acid, 9,9,9,8,8,7,7,6,6,5,5,4,4,3,3-pentadecafluorononanoic acid, 10,10,10,9,9,8,8,7,7,6,6,5,5,4,4,3,3-heptadecafluorodecanoic acid, 3,3-difluoroprop-2-enoic acid, 4,4,4,3-tetrafluorobut-2-enoic acid, 5,5,5,4,4,3-hexafluoropent-2-enoic acid, 6,6,6,5,5,4,4,3-octafluorohex-2-enoic acid, 7,7,7,6,6,5,5,4,4,3-decafluorohept-2-enoic acid, 8,8,8,7,7,6,6,5,5,4,4,3-dodecafluorooct-2-enoic acid, 9,9,9,8,8,7,7,6,6,5,5,4,4,3-tetradecafluoronon-2-enoic acid and 10,10,10,9,9,8,8,7,7,6,6,5,5,4,4,3-hexadecafluorodec-2-enoic acid or of 3,3-bis(trifluoromethyl)-6,6,6,5,5,4,4-heptafluorohexanoic acid are used as catalysts.

## Revendications

1. Utilisation d'anions de la formule générale (I)
(R^{f})ₙ-CR'₍₃₋ₙ₎-C(O)O⁻ (I)
où
R^{f} est un reste perfluoré en C₁-C₃₀, qui est le cas échéant ramifié, cyclique et/ou insaturé,
R' sont des substituants identiques ou différents, le cas échéant contenant un hétéroatome, choisis parmi le groupe consistant en H, alkyle en C₁-C₂₀ et/ou aryle, et
n est 1 ou 2,
comme catalyseur lors de l'oligomérisation de groupes NCO.

2. Procédé de préparation de polyisocyanates contenant des groupes iminooxadiazinedione, dans lequel les polyisocyanates sont mis à réagir en présence d'anions de la formule générale (I)
(R^{f})ₙ-CR'₍₃₋ₙ₎-C(O)O⁻ (I)
où
R^{f} est un reste perfluoré en C₁-C₃₀, qui est le cas échéant ramifié, cyclique et/ou insaturé,
R' sont des substituants différents, le cas échéant contenant un hétéroatome, choisis parmi le groupe consistant en H, alkyle en C₁-C₂₀ et/ou aryle, et
n est 1 ou 2.

3. Procédé de préparation de polyisocyanates contenant des groupes iminooxadiazinedione selon la revendication 2, **caractérisé en ce que** des polyisocyanates avec des groupes NCO liés de manière aliphatique et/ou cycloaliphatique sont mis en oeuvre.

4. Procédé de préparation de polyisocyanates contenant des groupes iminooxadiazinedione selon la revendication 2 ou 3, **caractérisé en ce que** comme contre-ion des anions de formule (I), on met en oeuvre des cations ammonium ou phosphonium.

5. Procédé de préparation de polyisocyanates contenant des groupes iminooxadiazinedione selon l'une des revendications 2 à 4, **caractérisé en ce que** comme catalyseur, on utilise des sels d'ammonium ainsi que de phosphonium quaternaires de l'acide 3,3,3-trifluoropropanoïque, l'acide 4,4,4,3,3-pentafluorobutanoïque, l'acide 5,5,5,4,4,3,3-heptafluoropentanoïque, l'acide 6,6,6,5,5,4,4,3,3-nonafluorhexanoïque, l'acide 7,7,7,6,6,5,5,4,4,3,3-undécafluoroheptanoïque, l'acide 8,8,8,7,7,6,6,5,5,4,4,3,3-tridécafluorooctanoïque, l'acide 9,9,9,8,8,7,7,6,6,5,5,4,4,3,3-pentadécafluorononanoïque, l'acide 10,10,10,9,9,8,8,7,7,6,6,5,5,4,4,3,3-heptadécafluorodécanoïque, l'acide 3,3-difluoroprop-2-ènoïque, l'acide 4,4,4,3-tétrafluorobut-2-ènoïque, l'acide 5,5,5,4,4,3-hexafluoropent-2-ènoïque, l'acide 6,6,6,5,5,4,4,3-octafluorohex-2-ènoïque, l'acide 7,7,7,6,6,5,5,4,4,3-décafluorohept-2-ènoïque, l'acide 8,8,8,7,7,6,6,5,5,4,4,3-dodécafluorooct-2-ènoïque, l'acide 9,9,9,8,8,7,7,6,6,5,5,4,4,3-tétradécafluoronon-2-ènoïque, l'acide 10,10,10,9,9,8,8,7,7,6,6,5,5,4,4,3-hexdécafluorodéc-2-ènoïque ou l'acide 3,3-bis(trifluorométhyl)-6,6,6,5,5,4,4-heptafluorohexanoïque.
